(19) Europäisches Patentamt / European Patent Office / Office européen des brevets

(11) **EP 3 317 139 B1**

(12) **FASCICULE DE BREVET EUROPEEN**

(45) Date de publication et mention
de la délivrance du brevet:
**03.04.2019 Bulletin 2019/14**

(51) Int Cl.:
***B60L 15/20*** *(2006.01)*   ***B60W 10/06*** *(2006.01)*
***B60W 10/08*** *(2006.01)*   ***B60W 10/26*** *(2006.01)*
***B60W 20/12*** *(2016.01)*

(21) Numéro de dépôt: **16739220.8**

(22) Date de dépôt: **15.06.2016**

(86) Numéro de dépôt international:
**PCT/FR2016/051444**

(87) Numéro de publication internationale:
**WO 2017/001740 (05.01.2017 Gazette 2017/01)**

(54) **PROCÉDÉ DE CALCUL D'UNE CONSIGNE DE GESTION DE LA CONSOMMATION EN CARBURANT ET EN COURANT ÉLECTRIQUE D'UN VÉHICULE AUTOMOBILE HYBRIDE**

VERFAHREN ZUR BERECHNUNG EINES SOLLWERTS ZUR VERWALTUNG DES KRAFTSTOFF- UND STROMVERBRAUCHS EINES HYBRIDKRAFTFAHRZEUGS

METHOD FOR CALCULATING A SETPOINT FOR MANAGING THE FUEL AND ELECTRICITY CONSUMPTION OF A HYBRID MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.07.2015 FR 1556271**

(43) Date de publication de la demande:
**09.05.2018 Bulletin 2018/19**

(73) Titulaire: **Renault S.A.S.**
**92100 Boulogne-Billancourt (FR)**

(72) Inventeurs:
• **OURABAH, Abdel-Djalil**
**75013 Paris (FR)**
• **JAFFREZIC, Xavier**
**78280 Guyancourt (FR)**
• **GAYED, Atef**
**95670 Marly La Ville (FR)**
• **QUOST, Benjamin**
**60200 Compiegne (FR)**
• **DENOEUX, Thierry**
**60200 Compiegne (FR)**

(56) Documents cités:
WO-A1-2015/059536   FR-A1- 2 907 745
FR-A1- 2 988 674   US-A1- 2011 066 308
US-A1- 2011 246 004

**Description**

DOMAINE TECHNIQUE AUQUEL SE RAPPORTE L'INVENTION

La présente invention concerne de manière générale les véhicules hybrides rechargeables.

Elle concerne plus particulièrement un procédé de calcul d'une consigne de gestion de la consommation en carburant et en courant électrique d'un véhicule automobile hybride comportant au moins un moteur électrique alimenté en courant électrique par une batterie de traction, et un moteur à combustion interne alimenté en carburant.

L'invention trouve une application particulièrement avantageuse dans les véhicules hybrides à grande autonomie électrique, c'est-à-dire dans les véhicules susceptibles de rouler à l'aide de leur seul moteur électrique sur une distance supérieure à 10 kilomètres.

ARRIERE-PLAN TECHNOLOGIQUE

Un véhicule hybride rechargeable comporte une chaîne de traction thermique conventionnelle (avec un moteur à combustion interne et un réservoir de carburant) et une chaîne de traction électrique (avec un moteur électrique et une batterie de traction pouvant notamment être mise en charge sur une prise de courant).

Un tel véhicule hybride est susceptible d'être tracté par sa seule chaîne de traction électrique, ou par sa seule chaîne de traction thermique, ou encore simultanément par ses deux chaînes de traction électrique et thermique. Il est également possible de recharger la batterie de traction en profitant de la puissance développée par le moteur à combustion interne, ou encore en récupérant l'énergie cinétique développée par le véhicule automobile au freinage.

Du fait de la méconnaissance du futur trajet du véhicule, la stratégie actuellement implémentée pour utiliser l'une ou l'autre des chaînes de traction consiste à systématiquement commencer par décharger la batterie de traction au début du trajet jusqu'à atteindre un niveau d'énergie minimal, puis à utiliser ensuite la chaîne de traction thermique. De cette manière, lorsque le conducteur réalise des trajets courts et qu'il a régulièrement la possibilité de recharger la batterie de traction, il utilise au maximum la chaîne de traction électrique, ce qui réduit les émissions polluantes du véhicule.

Cette stratégie ne garantit toutefois pas toujours une consommation en carburant minimale. C'est notamment le cas lorsque l'usager commence un trajet par une partie autoroutière et qu'il le termine par une partie en ville. En effet, l'utilisation de la chaîne de traction électrique est peu adaptée sur autoroute puisque la batterie de traction s'y décharge très vite, et l'utilisation de la chaîne de traction thermique est peu adaptée en ville puisque le rendement du moteur à combustion interne est plus faible en ville que sur autoroute.

Dans le but de pallier à cet inconvénient, le document US8825243 divulgue de construire une courbe de décharge « idéale » de la batterie sur une prédiction de trajet connue par un système de navigation, cette courbe étant construite de sorte que l'état de charge de la batterie n'atteigne sa valeur minimum autorisée qu'en fin de trajet, puis de piloter le système hybride sur cette prédiction de trajet de manière à suivre au mieux cette courbe de décharge. L'inconvénient d'une telle solution, c'est qu'en cas de diversité importante des conditions de route sur le trajet, par exemple le cas simple mais très courant où l'on commence sur un premier tronçon en ville, puis on poursuit sur un deuxième tronçon d'autoroute et enfin on termine sur un troisième tronçon en ville, alors le trajet est effectué de manière non optimale du point de vue de la consommation énergétique.

L'utilisation de la chaîne de traction thermique en ville s'avère en outre moins agréable pour le conducteur que celle de la chaîne de traction électrique.

Enfin, la législation empêche parfois l'utilisation du moteur à combustion interne en ville, de sorte que le conducteur n'a alors plus accès à la ville.

OBJET DE L'INVENTION

Afin de remédier aux inconvénients précités de l'état de la technique, la présente invention propose de pallier la méconnaissance du futur trajet en exploitant les données issues du système de navigation embarqué dans le véhicule.

Plus particulièrement, on propose selon l'invention un procédé de calcul tel que défini dans l'introduction, dans lequel il est prévu des étapes de :

a) acquisition, au moyen d'un système de navigation, d'un trajet à effectuer,

b) division dudit trajet en tronçons successifs,

c) acquisition, pour chaque tronçon, d'attributs caractérisant ledit tronçon,

d) pour chacun desdits tronçons et compte tenu de ses attributs, sélection, parmi une pluralité de relations prédéterminées reliant des valeurs de consommation en carburant à des valeurs de consommation d'énergie électrique, d'une relation reliant la consommation en carburant du véhicule automobile hybride sur le tronçon à sa consommation d'énergie électrique,

e) détermination d'un point optimal de consommation dans chacune des relations sélectionnées, de telle sorte que l'ensemble des points optimaux minimisent la consommation en carburant du véhicule automobile hybride sur l'ensemble du trajet et maximisent la décharge de la batterie de traction à l'issue dudit trajet, et

f) élaboration d'une consigne de gestion énergétique tout le long du trajet, en fonction des coordonnées desdits points optimaux.

Ainsi, grâce à l'invention, il est possible de déterminer à quels moments il conviendra d'utiliser plutôt le moteur électrique ou plutôt le moteur à combustion interne afin de diminuer au mieux la consommation en carburant du véhicule sur le trajet qu'il doit emprunter.

A titre d'exemple, il sera possible de privilégier l'utilisation de la chaîne de traction thermique sur autoroute, où son rendement est le meilleur, et l'utilisation de la chaîne de traction électrique en ville, où son rendement et son agrément sont optimums.

Il sera également possible d'améliorer le rendement du moteur à combustion interne en le soulageant grâce au moteur électrique dans les points de fonctionnement les plus défavorables.

D'autres caractéristiques avantageuses et non limitatives du procédé de calcul conforme à l'invention sont les suivantes :

- les relations prédéterminées sont des courbes ou des cartographies reliant des valeurs de consommation de carburant du moteur à combustion interne à des valeurs de charge ou de décharge de la batterie de traction ;
- à l'étape d), la relation est sélectionnée indépendamment de la pente dudit tronçon, et, préalablement à l'étape e), il est prévu une étape d1) de correction de ladite relation compte tenu de ladite pente ;
- ladite étape d1) de correction consiste à décaler chaque point de la relation de manière à modifier, à valeur de charge ou décharge constante, la consommation en carburant d'une valeur fonction de la pente ;
- à l'étape d), la relation est sélectionnée indépendamment de la consommation en courant électrique d'appareils auxiliaires qui sont distincts du moteur électrique et qui sont alimentés en courant par la batterie de traction, et préalablement à l'étape e), il est prévu une étape d2) de correction de ladite relation compte tenu de ladite consommation en courant électrique des appareils auxiliaires ;
- ladite étape d2) de correction consiste à décaler chaque point de la relation de manière à modifier, à valeur de consommation en carburant constante, la charge ou décharge d'une valeur fonction de ladite consommation en courant électrique des appareils auxiliaires ;
- si, au cours du trajet, la consommation en courant électrique des appareils auxiliaires varie sensiblement, les étapes d) et suivantes sont réitérées ;
- une mémoire mémorisant les relations prédéterminées ainsi qu'un tableau associant à chaque valeur d'attribut une probabilité que le tronçon soit associée à l'une ou l'autre des relations prédéterminées, à l'étape d), il est prévu pour chaque tronçon de déterminer grâce audit tableau, compte tenu des valeurs des attributs associés à ce tronçon, la somme des probabilités que le tronçon appartienne à l'une ou l'autre des relations prédéterminées, et de sélectionner la relation présentant la somme de probabilité la plus élevée ;
- les relations étant des courbes, chaque courbe est définie comme un polynôme de second ordre, pour lequel les variations de charge et décharge de la batterie de traction sont bornées entre un seuil minimal et un seuil maximal ;
- ledit polynôme présente deux coefficients invariables ;
- à l'étape b), chaque tronçon est défini comme étant une portion de longueur maximale du trajet qui comporte au moins un attribut invariable sur toute sa longueur ;
- ledit attribut invariable sur chaque tronçon est choisi dans la liste suivante : pente du tronçon, vitesse caractéristique des véhicules sur le tronçon, et catégorie affectée au tronçon par le système de navigation ;
- à l'étape e), la détermination du point optimal de consommation de la relation associée à chaque tronçon est effectuée au moyen d'un algorithme d'optimisation.

DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est un tableau illustrant les valeurs d'attributs caractérisant des tronçons d'un trajet qu'un véhicule doit effectuer ;
- la figure 2 est un tableau illustrant les paramètres de courbes de référence caractérisant les tronçons du trajet à effectuer ;
- la figure 3 est un graphique illustrant la répartition de courbes de consommation spécifique acquises lors de roulages de test ;
- la figure 4 est un graphique illustrant plusieurs courbes de référence ;
- la figure 5 est un tableau associant à chaque valeur d'attribut affecté à un tronçon, une probabilité que ce tronçon soit associé à l'une ou l'autre des courbes de référence de la figure 4 ;
- la figure 6 est un graphique illustrant les corrections à apporter à une courbe de référence, compte tenu de la consommation électriques d'appareils auxiliaires du véhicule ;
- la figure 7 est un graphique illustrant les corrections à apporter à une courbe de référence, compte tenu de la pente du tronçon du trajet correspondant ; et
- la figure 8 est un graphique illustrant différents points pour chaque courbe de référence associé à chaque tronçon et d'une courbe passant par les points optimaux de ces courbes de référence.

Classiquement, un véhicule automobile comporte un châssis qui supporte notamment un groupe motopropulseur, des éléments de carrosserie et des éléments d'habitacle.

Dans un véhicule hybride rechargeable, le groupe motopropulseur comporte une chaîne de traction thermique et une chaîne de traction électrique.

La chaîne de traction thermique comporte notamment un réservoir de carburant et un moteur à combustion interne alimenté en carburant par le réservoir.

La chaîne de traction électrique comporte quant à elle une batterie de traction et un ou plusieurs moteur(s) électrique(s) alimentés en courant électrique par la batterie de traction.

Le véhicule automobile comporte ici aussi une prise de courant permettant de mettre en charge localement la batterie de traction, par exemple sur le réseau électrique d'une habitation ou sur tout autre réseau électrique.

Le véhicule automobile comporte également des appareils auxiliaires, qui sont ici définis comme des appareils électriques alimentés en courant par la batterie de traction.

Parmi ces appareils auxiliaires, on peut citer le moteur de climatisation, les moteurs des vitres électriques, ou encore le système de géolocalisation et de navigation.

Ce système de géolocalisation et de navigation comporte classiquement une antenne permettant de recevoir des signaux relatifs à la position géolocalisée du véhicule automobile, une mémoire permettant de stocker une cartographie d'un pays ou d'une région, et un écran permettant d'illustrer la position du véhicule sur cette cartographie.

Ici, on considérera le cas où cet écran est tactile pour permettre au conducteur d'y saisir des informations. Il pourrait bien entendu en être autrement.

Enfin, le système de géolocalisation et de navigation comporte un contrôleur permettant de calculer un trajet à effectuer compte tenu des informations saisies par le conducteur, de la cartographie stockée dans sa mémoire, et de la position du véhicule automobile.

Le véhicule automobile 1 comprend par ailleurs une unité électronique de commande (ou ECU pour "Electronic Control Unit"), appelée ici calculateur, permettant notamment de commander les deux chaînes de traction précitées (notamment les puissances développées par le moteur électrique et par le moteur à combustion interne).

Dans le contexte de la présente invention, ce calculateur est connecté au contrôleur du système de géolocalisation et de navigation, de manière que ces deux éléments peuvent se communiquer des informations.

Ici, ils sont connectés ensemble par le réseau principal de communication inter-organes du véhicule (typiquement par le bus CAN).

Le calculateur comprend un processeur et une unité de mémorisation (appelée ci-après mémoire).

Cette mémoire enregistre des données utilisées dans le cadre du procédé décrit ci-dessous.

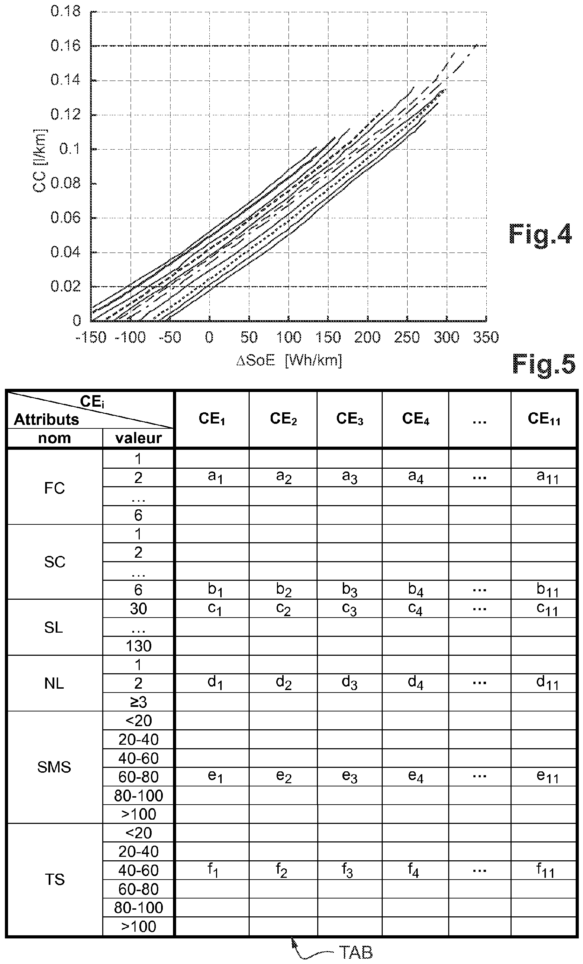

Elle enregistre notamment un tableau du type de celui illustré sur la figure 5 (qui sera détaillé dans la suite de cet exposé).

Elle enregistre également une application informatique, constituée de programmes d'ordinateur comprenant des instructions dont l'exécution par le processeur permet la mise en oeuvre par le calculateur du procédé décrit ci-après.

A titre liminaire, on définira ici plusieurs notions utilisées dans l'exposé du procédé décrit ci-après.

On pourra ainsi définir le terme « trajet » comme étant un chemin que le véhicule automobile doit emprunter depuis une station de départ pour se rendre à une station d'arrivée.

Cette station d'arrivée, but du trajet, sera considérée comme étant équipée d'une station de charge permettant de recharger la batterie de traction via la prise de courant équipant le véhicule.

Chaque trajet pourra être découpé en « segments adjacents » ou en « tronçons adjacents ».

La notion de segments sera celle nativement utilisée par le contrôleur équipant le système de géolocalisation et de navigation.

En pratique, chaque segment correspond à une partie du trajet qui s'étend entre deux intersections de routes. Pour définir le trajet le plus court ou le plus rapide, le contrôleur va donc déterminer par quels segments de routes le trajet doit passer.

La notion de tronçons est différente. Elle sera bien détaillée dans la suite de cet exposé. Pour simplifier, chaque tronçon du trajet correspond à une partie du trajet sur laquelle les caractéristiques de la route n'évoluent pas sensiblement. A titre d'exemple, le trajet pourrait ainsi être découpé en plusieurs tronçons sur chacun desquels la vitesse maximale autorisée est constante.

Ces tronçons sont caractérisés par des paramètres appelés ici « attributs ». Des exemples d'attributs permettant de caractériser chaque tronçon sont les suivants.

Un premier attribut sera la « catégorie de route FC ». Les contrôleurs équipant les systèmes de géolocalisation et de navigation utilisent généralement ce genre de catégories pour distinguer les différents types de routes. Ici, cette catégorie pourra prendre une valeur entière comprise entre 1 et 6. Un attribut égal à 1 pourra correspondre à une autoroute, un attribut égal à 2 pourra correspondre à une route nationale, ...

Un second attribut sera la « pente RG » du tronçon, exprimée en degrés ou en pourcentage.

Les troisième, quatrième, cinquième et sixième attributs seront relatifs à des vitesses caractéristiques des véhicules empruntant le tronçon.

Le troisième attribut sera la « catégorie de vitesse SC » du tronçon. Les contrôleurs équipant les systèmes de géolocalisation et de navigation utilisent généralement aussi ce genre de catégories pour distinguer les différents types de routes. Ici, cette catégorie pourra prendre une valeur entière comprise entre 1 et 6. Un attribut égal à 1 pourra correspondre à une route à grande vitesse (supérieure à 120 km/h), un attribut égal à 2 pourra correspondre à une route à vitesse élevée (comprise entre 100 et 120 km/h), ...

Le quatrième attribut sera la « vitesse maximum autorisée SL » sur le tronçon.

Le cinquième attribut sera la « vitesse moyenne SMS » constatée sur le tronçon (dont la valeur est issue d'une mesure statistique effectuée sur chaque route).

Le sixième attribut sera la « vitesse instantanée TS » constatée sur le tronçon (dont la valeur est issue d'un système d'information sur l'état du trafic en temps réel).

Le septième attribut sera la « longueur LL » du tronçon.

Le huitième attribut sera le « rayon de courbure moyen LC » du tronçon.

Le neuvième attribut sera le « nombre de voies NL » du tronçon dans le sens de circulation emprunté par le véhicule.

Dans l'exposé qui suit, on utilisera ces neuf attributs pour caractériser chaque tronçon du trajet.

En variante, on pourra caractériser chaque tronçon du trajet par un nombre restreint ou plus important d'attributs.

On définira par ailleurs l'état d'énergie SOE (de l'anglais « state of energy ») de la batterie de traction comme étant un paramètre permettant de caractériser l'énergie restante dans cette batterie de traction. En variante, on pourra utiliser un autre paramètre tel que l'état de charge SOC de la batterie (de l'anglais « state of charge ») ou tout autre paramètre du même type (résistance interne de la batterie, tension aux bornes de la batterie, ...).

La charge ou la décharge $\Delta$SOE de la batterie de traction sera alors considérée égale à la différence entre deux états d'énergie considérés à deux moments distincts.

On définit alors la « courbe de consommation spécifique » du véhicule sur un tronçon considéré comme étant une courbe qui associe à chaque valeur de consommation en carburant CC du véhicule une valeur de charge ou décharge $\Delta$SOE de la batterie de traction. En effet, sur un tronçon déterminé, il est possible d'estimer quelle sera la consommation en carburant CC du véhicule (en litre par kilomètre parcouru) et la charge ou décharge $\Delta$SOE de la batterie de traction en (Watt-heure par kilomètre). Ces deux valeurs seront liées par une courbe, puisqu'elles varieront selon que l'on utilise plutôt la chaîne de traction électrique ou plutôt la chaîne de traction thermique pour faire avancer le véhicule.

Puisqu'il existe une infinité de courbes de consommation spécifique, on définit enfin les « courbes de référence » comme étant des courbes de consommation spécifique particulières, dont on connaîtra bien les caractéristiques et qui permettront d'approximer chaque courbe de consommation spécifique. Autrement formulé, comme cela apparaîtra plus clairement dans la suite de cet exposé, on associera à chaque tronçon de trajet non pas une courbe de consommation spécifique, mais plutôt une courbe de référence (celle qui constituera la meilleure approximation de la courbe de consommation spécifique).

Le procédé, qui est mis en oeuvre conjointement par le contrôleur du système de géolocalisation et de navigation et par le calculateur du véhicule, est un procédé de calcul d'une consigne de gestion de la consommation en carburant et en courant électrique du véhicule.

Ce procédé consiste plus précisément à déterminer comment, sur un trajet prédéfini, il faudra utiliser la chaîne de traction électrique et la chaîne de traction thermique de manière à réduire au mieux la consommation en carburant du véhicule ainsi que ses émissions polluantes.

Selon une caractéristique particulièrement avantageuse de l'invention, le procédé comprend les six étapes principales suivantes :

- acquisition d'un trajet à effectuer,
- division dudit trajet en tronçons $T_i$ adjacents successifs,
- acquisition, pour chaque tronçon $T_i$, d'attributs FC, SC, SL, TS, RG, LL NL, SMS caractérisant ce tronçon $T_i$,
- détermination, pour chacun des tronçons $T_i$, compte tenu des attributs FC, SC, SL, TS, RG, LL NL, SMS de ce tronçon $T_i$, d'une relation (appelée ici courbe de référence $CE_j$) reliant chaque valeur de consommation en carburant CC du véhicule automobile hybride sur le tronçon à une valeur de charge ou décharge $\Delta$SOE de la batterie de traction,
- détermination d'un point optimal $P_i$ de chaque courbe de référence $CE_j$ permettant de minimiser la consommation en carburant du véhicule automobile hybride sur l'ensemble du trajet et d'obtenir une décharge complète de la batterie de traction à l'issue dudit trajet, et
- élaboration d'une consigne de gestion énergétique en fonction des coordonnées desdits points optimaux $P_i$.

Ces six étapes successives sont détaillées dans la suite de cet exposé.

La première étape consiste à acquérir le trajet que le véhicule automobile doit effectuer.

Cette étape pourra être opérée par le contrôleur embarqué dans le système de géolocalisation et de navigation.

Cette étape est alors mise en oeuvre de manière classique.

Ainsi, lorsque le conducteur utilise l'écran tactile du système de géolocalisation et de navigation pour définir une station d'arrivée, le contrôleur de ce système calcule le trajet à effectuer, en fonction notamment des paramètres de routage sélectionnés par le conducteur (trajet le plus rapide, trajet le plus court,...).

A ce stade, on pourra noter que le procédé devra être réinitialisé dès lors que le véhicule emprunte un trajet différent de celui défini par le système de géolocalisation et de navigation.

En variante, cette première étape pourra être réalisée autrement.

Ainsi, il sera possible de s'affranchir de la saisie par le conducteur de la station d'arrivée sur l'écran tactile. Pour cela, le contrôleur pourra détecter les habitudes du conducteur et en déduire automatiquement la station d'arrivée.

Par exemple, lorsque le conducteur emprunte chaque jour de la semaine le même trajet pour aller travailler, ce trajet peut être automatiquement acquis sans que le conducteur n'ait à saisir une quelconque information sur l'écran tactile du système de géolocalisation et de navigation.

A l'issue de cette première étape, le contrôleur embarqué dans le système de géolocalisation et de navigation connaît le trajet du véhicule, qui est alors composé d'une pluralité de segments adjacents, dont on rappelle qu'ils s'étendent chacun entre deux intersections de route.

La seconde étape consiste à diviser le trajet en tronçons $T_i$.

L'intérêt de re-diviser le trajet non plus en segments mais en tronçons est tout d'abord de réduire le nombre de subdivisions du trajet. En effet, il arrive souvent que les attributs de deux segments successifs soient identiques. Si on traitait séparément ces deux segments successifs, on multiplierait inutilement la durée des calculs. En rassemblant les segments identiques au sein d'un même tronçon, on va pouvoir réduire la durée des calculs.

Un autre intérêt est que les caractéristiques de la route sur un même segment peuvent varier sensiblement (une partie du segment peut correspondre à une route de pente nulle et une autre partie de ce segment peut correspondre à une route de pente importante). Ici, on souhaite diviser le trajet en tronçons sur chacun desquels les caractéristiques de la route restent homogènes.

Chaque tronçon $T_i$ sera ici défini comme étant une portion du trajet qui comporte au moins un attribut invariable sur toute sa longueur.

Cet attribut pourra être constitué par la pente RG et/ou par la catégorie de vitesse SC et/ou par la catégorie de route FC.

Ici, cette étape sera mise en oeuvre par le contrôleur embarqué dans le système de géolocalisation et de navigation. Il découpera à cet effet le trajet en tronçons $T_i$ de longueurs maximum sur lesquels les trois attributs précités (RG, SC, FC) sont constants.

A l'issue de cette seconde étape, le contrôleur a ainsi défini N tronçons.

La troisième étape consiste à acquérir les attributs de chaque tronçon $T_i$.

Lorsque l'un des attributs sera variable sur le tronçon considéré, c'est la valeur moyenne de cet attribut sur l'ensemble du tronçon qui sera considérée.

En pratique, cette troisième étape est réalisée de la manière suivante.

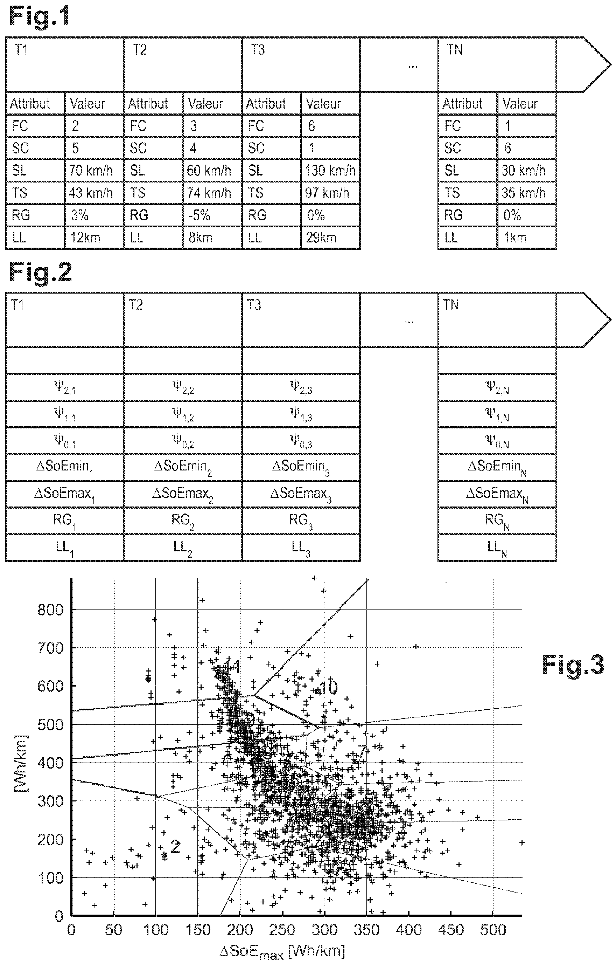

Tout d'abord, le contrôleur embarqué dans le système de géolocalisation et de navigation informe le calculateur qu'un nouveau trajet a été calculé. Le calculateur demande alors l'envoi des attributs de chaque tronçon, sous la forme par exemple d'un tableau du type de celui illustré sur la figure 1.

Le contrôleur acquiert alors les attributs de chaque tronçon de la manière suivante.

Il en calcule une partie, notamment la longueur LL du tronçon.

Il en lit une autre partie dans la mémoire du système de géolocalisation et de navigation, notamment la catégorie de route FC, la pente RG, la catégorie de vitesse SC, la vitesse maximum autorisée SL, la vitesse moyenne SMS, le rayon de courbure moyen LC, et le nombre de voies NL.

Il se fait communiquer une dernière partie de ces attributs par un autre appareil, notamment la vitesse instantanée TS que lui communique le système d'information sur l'état du trafic en temps réel.

Le contrôleur transmet ensuite l'ensemble de ces informations au calculateur principal du véhicule, via le bus CAN.

L'avantage d'utiliser le contrôleur embarqué dans le système de géolocalisation et de navigation plutôt que le calculateur principal du véhicule pour opérer les trois premières étapes est de réduire le nombre d'informations à transmettre au calculateur par le bus CAN. En effet, en fusionnant les segments adjacents du trajet qui présentent les mêmes attributs, le volume des données transmises est réduit, ce qui accélère la transmission des données par le bus CAN.

Dès réception des informations, le calculateur met en oeuvre les étapes suivantes.

La quatrième étape consiste alors, pour chacun des tronçons $T_i$, à déterminer parmi les courbes de référence $CE_j$ enregistrées dans la mémoire du calculateur celle qui permettra d'estimer au mieux la consommation énergétique (en carburant et en courant) du véhicule sur le tronçon $T_i$ considéré.

Cette étape permet alors de passer d'une caractérisation de chaque tronçon par des attributs, à une caractérisation par un coût énergétique.

Au cours de cette quatrième étape, le calculateur va utiliser le tableau TAB illustré sur la figure 5, qui est enregistré dans sa mémoire.

Comme le montre cette figure 5, ce tableau TAB présente des lignes qui correspondent chacune à une valeur (ou à un intervalle de valeurs) d'un attribut. Il présente des colonnes correspondant chacune à l'une des courbes de référence $CE_j$. Dans l'exemple illustré, on considèrera que la mémoire du calculateur stocke M courbes de référence CE$_j$, avec M ici égal à onze.

Sur la figure 5, les cases du tableau TAB sont laissées vides puisque les valeurs qu'elles comporteront dépendront des caractéristiques du véhicule.

En pratique, ce tableau TAB sera mémorisé dans la mémoire du calculateur avec des valeurs dans chacune de ces cases.

Ces valeurs seront des valeurs de probabilité (comprises entre 0 et 1) correspondant à la probabilité que chaque valeur d'attribut corresponde à l'une ou l'autre des courbes de référence CE$_j$.

A titre d'exemple, si la catégorie de route FC d'un tronçon T$_i$ présente une valeur égale à 2, on pourra lire dans le tableau que la probabilité que ce tronçon soit bien caractérisé en termes de coût énergétique par la courbe de référence CE1 sera égale à a$_1$, que la probabilité que ce tronçon soit bien caractérisé en termes de coût énergétique par la courbe de référence CE2 sera égale à a$_2$, ...

On notera que les valeurs des pentes RG et de longueur LL n'ont pas été, à dessein, utilisées dans ce tableau TAB.

A ce stade, le calculateur peut alors relever chaque valeur de probabilité correspondant à la valeur de chaque attribut du tronçon T$_i$ considéré.

Sur l'exemple illustré, où on considère que l'attribut FC est égal à 2, que l'attribut SC est égal à 6, que l'attribut SL est égal à 30, que l'attribut NL est égal à 2, que l'attribut SMS est compris entre 60 et 80 et que l'attribut TS est compris entre 40 et 60, le calculateur relève les valeurs notées a$_1$ à a$_{11}$, b$_1$ à b$_{11}$, C$_1$ à C$_{11}$, d$_1$ à d$_{11}$, e$_1$ à e$_{11}$, et f$_1$ à f$_{11}$.

Le calculateur fait ensuite la somme des probabilités que le tronçon T$_i$ considéré soit bien caractérisé en termes de coût énergétique par chacune des onze courbes de référence CE$_j$.

Sur l'exemple illustré, le calculateur somme à cet effet les valeurs notées a$_1$ à f$_1$, puis a$_2$ à f$_2$, ...

Enfin, le calculateur détermine laquelle des onze sommes donne le résultat le plus élevé.

Alors, il considère que la courbe de référence CE$_j$ à laquelle est associée cette somme de probabilité élevée est celle qui caractérise le mieux le tronçon T$_i$ en terme de coût énergétique.

Le calculateur peut alors acquérir dans sa mémoire les valeurs des paramètres caractérisant cette courbe de référence CE$_j$.

A ce stade de l'exposé, on peut s'intéresser plus précisément à la manière selon laquelle ces courbes de référence sont obtenues et modélisées.

Pour chaque modèle de véhicule (ou pour chaque modèle de moteurs, ou pour chaque ensemble de modèles de voitures, ou pour chaque ensemble de modèle de moteurs), il est nécessaire de réaliser un grand nombre de roulages tests (ou de simulation de roulages tests) sur différents tronçons de route géolocalisés.

Ces roulages tests permettent de déterminer la consommation en carburant et en courant électrique du véhicule sur différents tronçons dont les attributs sont connus. Pour cela, on fait évoluer le véhicule plusieurs fois sur chaque tronçon en augmentant à chaque fois la part de la traction développée par le moteur électrique.

Il est alors possible de générer une courbe de consommation spécifique CCS pour chaque tronçon. Ces courbes de consommation spécifique sont du type des courbes illustrées sur la figure 4.

On peut observer sur chacune de ces courbes que plus on utilise de l'énergie électrique (soit un ΔSoE < 0) plus la consommation de carburant baisse jusqu'à atteindre 0 lors d'un roulage en utilisant exclusivement la chaîne de traction électrique. A l'inverse plus on cherche à recharger la batterie via le moteur thermique (ΔSoE > 0) plus la consommation de carburant augmente. Enfin, on rappellera que chaque courbe de consommation spécifique CCS décrit la consommation énergétique moyenne du véhicule pour la situation d'un roulage sur route horizontale (pente nulle), sans consommation électrique des appareils auxiliaires.

Ces roulages tests permettent de trouver autant de courbes de consommation spécifique CCS qu'il y a de tronçons testés.

Chaque courbe de consommation spécifique CCS peut être modélisée par un polynôme de second ordre pour lequel les variations de charge et décharge ΔSOE de la batterie de traction sont bornées entre un seuil minimal ΔSOE$_{min}$ et un seuil maximal ΔSOE$_{max}$, ce que l'on peut écrire :

$$\begin{cases} m_{FC} = \Psi_2 . \Delta SoE^2 + \Psi_1 . \Delta SoE + \Psi_0 \\ \Delta SoE \in \begin{bmatrix} \Delta SoEmin & \Delta SoEmax \end{bmatrix} \end{cases}$$

avec $\Psi_0$, $\Psi_1$, $\Psi_2$ les coefficients du polynôme.

Comme le montrent les courbes de la figure 4, pour simplifier cette modélisation, on peut faire l'estimation que les deux coefficients $\Psi_1$, $\Psi_2$ sont identiques d'une courbe à l'autre. On peut également observer que le seuil minimal ΔSOE$_{min}$ dépend des trois coefficients du polynôme. Ainsi, seuls varient le coefficient $\Psi_0$ et le seuil maximal ΔSOE$_{max}$. Ce sont donc ces deux valeurs qui permettent de caractériser chaque courbe de consommation spécifique CCS.

La figure 3 illustre alors des points dont les coordonnées correspondent à ces deux variables $\Psi_0$ et ΔSOE$_{max}$. Elle montre la répartition des courbes de consommation spécifique CCS obtenues lors des roulages tests effectués. Ici, on considère que ces points sont répartis dans onze zones distinctes. Chaque zone est alors définie par son barycentre.

Ainsi, comme cela a été exposé supra, dans le procédé, on n'acquiert pas la courbe de consommation spécifique qui correspondrait exactement au tronçon considéré, mais on considère plutôt une des onze courbes de référence dont les variables $\Psi_0$ et ΔSOE$_{max}$ cor-

respondent au barycentre de l'une de ces onze zones.

A ce stade du procédé, chaque tronçon $T_i$ est alors défini comme le montre la figure 2 par les paramètres $\Psi_0$, $\Psi_1$, $\Psi_2$, $\Delta SOE_{min}$, $\Delta SOE_{max}$ précités, ainsi que par la longueur $LL_i$ de chaque tronçon $T_i$ et par sa pente $RG_i$.

Comme cela a été expliqué supra, la courbe énergétique $CE_i$ sélectionnée ne tient compte ni de la pente du tronçon $T_i$, ni de la consommation en courant électrique des appareils auxiliaires (moteur de climatisation, ...).

Afin de tenir compte de la pente de chaque tronçon $T_i$, il est prévu une étape de correction de chaque courbe de référence $CE_i$ en fonction de la pente $RG_i$.

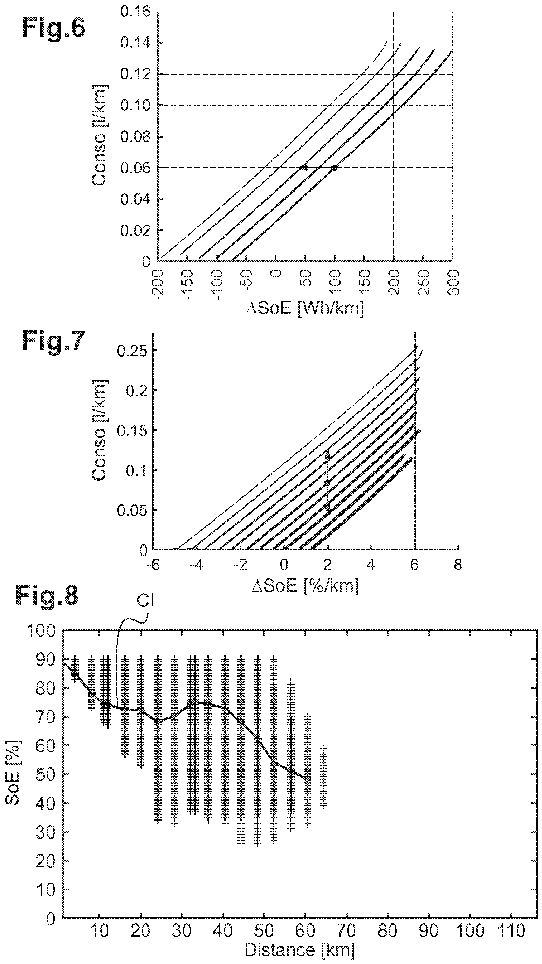

Comme le montre bien la figure 7, cette étape de correction consiste simplement à décaler la courbe de référence $CE_i$ associée au tronçon $T_i$ vers le haut ou vers le bas (c'est-à-dire à charge ou décharge $\Delta SOE$ constante), d'une valeur fonction de la pente $RG_i$.

On comprend en effet que lorsque le tronçon de route considéré monte, la consommation en carburant va être plus élevée que celle prévue initialement. A contrario, lorsque le tronçon de route considéré descend, la consommation en carburant va être moins élevée que celle prévue initialement.

En outre, lors des phases de freinage, il sera possible de récupérer davantage d'énergie électrique en descente qu'en montée.

En pratique, l'étape de correction consistera à corriger le paramètre $\Psi_0$ selon la formule suivante :

$$\Psi_0' = \Psi_0 + K.RGi \ ,$$

avec K un coefficient dans la valeur dépend du modèle de véhicule considéré et de ses caractéristiques (à titre d'exemple, on pourra ici considérer $K = 0.01327 \ l.km^{-1}$).

Afin de tenir compte de la consommation en courant électrique des appareils auxiliaires, il est prévu une seconde étape de correction de chaque courbe de référence $CE_i$ en fonction de la puissance électrique $P_{aux}$ consommée par ces appareils auxiliaires.

On notera ici que la valeur de puissance électrique $P_{aux}$ considérée est la valeur qui peut être mesurée au moment des calculs. Dans ce procédé, on fait donc l'hypothèse que la puissance électrique consommée restera sensiblement constante lors du trajet. Si jamais le calculateur détectait une grosse variation de cette puissance électrique sur une durée importante (par exemple parce que la climatisation est mise en route), il pourrait être programmé pour recommencer le procédé à cette étape afin de tenir compte de la nouvelle valeur de puissance électrique $P_{aux}$.

Plus précisément, le procédé pourrait être réinitialisé à cette seconde étape de correction si l'écart entre la puissance électrique considérée dans les calculs et celle mesurée devait rester supérieur à un seuil (par exemple de 10%) sur une durée supérieure à un seuil (par exemple 5 minutes).

Comme le montre bien la figure 6, la seconde étape de correction consiste simplement à décaler la courbe de référence $CE_i$ associée au tronçon $T_i$ vers la gauche (c'est-à-dire à consommation en carburant constante), d'une valeur fonction de la puissance électrique $P_{aux}$.

On comprend en effet que lorsque les appareils électriques sont utilisés, la charge de la batterie va être plus lente que prévue et la décharge de cette batterie va être plus rapide que prévue.

En pratique, l'étape de correction consistera à décaler la courbe de référence $CE_j$ d'une valeur $E_{AUX}$ calculée à partir de la formule suivante :

$$E_{AUX} = \frac{P_{AUX}}{\bar{v}}$$

où $\bar{v}$ représente la vitesse moyenne sur le tronçon (en km/h). Cette valeur peut être fournie directement par le système de géolocalisation et de navigation, en estimant qu'elle sera égale à la valeur de la vitesse du trafic ou à la vitesse moyenne statistique ou à la vitesse maximale autorisée.

La cinquième étape du procédé consiste ensuite à déterminer, sur chaque courbe de référence $CE_j$, le point optimal $P_i$ qui permettra de minimiser la consommation en carburant du véhicule automobile hybride sur l'ensemble du trajet et d'obtenir une décharge complète de la batterie de traction à l'issue dudit trajet.

Cette étape est ici effectuée au moyen d'un algorithme d'optimisation du type A*. Il s'agit d'un algorithme connu dans l'état de la technique et qui ne sera donc pas ici décrit en détail. On pourra toutefois expliquer brièvement son fonctionnement.

Pour cela, on se référera à la figure 8.

On y observe que pour chaque tronçon est tracée une série de points de passage par des états d'énergie SOE parallèle à l'axe des ordonnées, à une abscisse égale (en kilomètres) à la distance entre la station de départ et le point final du tronçon. Chaque point de cette ligne correspond à un état d'énergie SOE atteignable déduit à partir de la courbe de référence $CE_j$ associée à ce tronçon. L'espace des états d'énergie SOE est discrétisée en un nombre fini de points.

L'ordonnée de chaque point est alors égal à l'état d'énergie SOE de la batterie de traction qu'il resterait à l'issue du tronçon si le véhicule était piloté selon le point correspondant de la courbe de référence $CE_j$, compte tenu de la charge ou décharge appliquée à la batterie de traction.

Chaque point constitue donc un noeud n.

L'objectif de l'algorithme A* est alors de trouver le chemin CI qui permettra de minimiser la consommation en carburant du véhicule.

Le choix de l'ordre d'exploration des noeuds n est déterminé en tentant de minimiser une fonction f qui est la somme d'une fonction de coût g et d'une fonction heuristique h, comme le montre la formule suivante :

$$f(n)=g(n)+h(n)$$

où g(n) représente la quantité de carburant nécessaire pour arriver au noeud n depuis le noeud initial (début du trajet) sur la meilleur trajectoire disponible en fonction des choix de la charge ou décharge $\Delta$SOE à appliquer à la batterie sur les tronçons précédents, et

où h(n) représente une estimation optimiste de la quantité de carburant restante à consommer avec une charge ou décharge $\Delta$SOE qui pourrait être appliquée à la batterie de traction pour passer du noeud n au noeud final en considérant le cas d'une décharge linéaire de la batterie de traction depuis le noeud n.

La fonction f permet à l'algorithme d'explorer à chaque pas de calcul la trajectoire qui à la fois minimise le coût pour arriver au noeud courant mais aussi minimise le coût restant depuis ce noeud jusqu'à la fin du trajet.

Ainsi, l'utilisation de la fonction f incite cet algorithme à explorer les trajectoires les plus proches de la trajectoire optimale, cela limite l'exploration de trajectoires sous-optimales, ce qui lui permet d'obtenir de bons résultats en un minimum de pas de calcul.

Une fois le chemin optimal trouvé (passant par les points optimaux des courbes de référence CE$_j$), le calculateur élabore une consigne de gestion énergétique en fonction des coordonnées des points optimaux P$_i$.

Cette consigne de gestion énergétique est alors utilisée au cours du trajet par le calculateur afin de faire du suivi de trajectoire, de manière que l'état d'énergie SOE de la batterie de traction suive le chemin CI illustré sur la figure 8.

Plusieurs procédés permettent de réaliser un tel suivi. Un exemple est notamment bien illustré dans la demande de brevet FR2988674 déposée par la demanderesse, ou encore dans les documents WO2013150206 et WO2014001707.

La présente invention n'est nullement limitée au mode de réalisation décrit et représenté.

En particulier, au lieu de stocker les paramètres $\Psi_0$, $\Psi_1$, $\Psi_2$, $\Delta$SOE$_{min}$, $\Delta$SOE$_{max}$ des courbes de référence, on pourra prévoir que le calculateur stocke des points caractérisant globalement la forme de chaque courbe de référence. On parlera alors de cartographie.

Selon une autre variante de l'invention, dans le cas où le système de géolocalisation et de navigation ne connaît pas la valeur d'un attribut d'un tronçon du trajet, on pourra prévoir :

- soit que le calcul des sommes de probabilités ne tienne pas compte des valeurs des probabilités affectées à cet attribut,

- soit que le calcul remplace la valeur inconnue par une valeur prédéterminée.

**Revendications**

1. Procédé de calcul d'une consigne de gestion de la consommation en carburant et en courant électrique d'un véhicule automobile hybride comportant au moins un moteur électrique alimenté en courant électrique par une batterie de traction, et un moteur à combustion interne alimenté en carburant, **caractérisé en ce qu'**il comprend des étapes de :

   a) acquisition, au moyen d'un système de navigation, d'un trajet à effectuer,
   b) division dudit trajet en tronçons (T$_i$, i$\in${1...N}) successifs,
   c) acquisition, pour chaque tronçon (T$_i$), d'attributs (FC, SC, SL, TS, RG, LL NL, SMS) caractérisant ledit tronçon (T$_i$),
   d) pour chacun desdits tronçons (T$_i$) et compte tenu de ses attributs (FC, SC, SL, TS, RG, LL NL, SMS), sélection, parmi une pluralité de relations prédéterminées (CE$_j$, j$\in${1...M}) reliant des valeurs de consommation en carburant (CC) à des valeurs de consommation d'énergie électrique ($\Delta$SOE), d'une relation (CE$_j$) reliant la consommation en carburant (CC) du véhicule automobile hybride sur le tronçon (T$_i$) à sa consommation d'énergie électrique ($\Delta$SOE),
   e) détermination d'un point optimal de consommation (P$_i$) dans chacune des relations (CE$_j$) sélectionnées, de telle sorte que l'ensemble des points optimaux (P$_i$, i$\in${1...N}) minimisent la consommation en carburant du véhicule automobile hybride sur l'ensemble du trajet et maximisent la décharge de la batterie de traction à l'issue dudit trajet, et
   f) élaboration d'une consigne de gestion énergétique tout le long du trajet, en fonction des coordonnées desdits points optimaux (P$_i$).

2. Procédé de calcul selon la revendication précédente, dans lequel les relations prédéterminées (CE$_j$) sont des courbes ou des cartographies reliant des valeurs de consommation de carburant (CC) du moteur à combustion interne à des valeurs de charge ou de décharge ($\Delta$SOE) de la batterie de traction.

3. Procédé de calcul selon l'une des revendications précédentes, dans lequel, à l'étape d), la relation (CE$_j$) est sélectionnée indépendamment de la pente (RG) dudit tronçon (T$_i$), et dans lequel, préalablement à l'étape e), il est prévu une étape d1) de correction de ladite relation (CE$_j$) compte tenu de ladite pente (RG).

**4.** Procédé de calcul selon la revendication précédente, dans lequel ladite étape d1) de correction consiste à décaler chaque point de la relation (CE$_j$) de manière à modifier, à valeur de charge ou décharge ($\Delta$SOE) constante, la consommation en carburant (CC) d'une valeur fonction de la pente (RG).

**5.** Procédé de calcul selon l'une des revendications précédentes, dans lequel, à l'étape d), la relation (CE$_j$) est sélectionnée indépendamment de la consommation en courant électrique d'appareils auxiliaires qui sont distincts du moteur électrique et qui sont alimentés en courant par la batterie de traction, et dans lequel, préalablement à l'étape e), il est prévu une étape d2) de correction de ladite relation (CE$_j$) compte tenu de ladite consommation en courant électrique des appareils auxiliaires.

**6.** Procédé de calcul selon la revendication précédente, dans lequel ladite étape d2) de correction consiste à décaler chaque point de la relation (CE$_j$) de manière à modifier, à valeur de consommation en carburant (CC) constante, la charge ou décharge ($\Delta$SOE) d'une valeur fonction de ladite consommation en courant électrique des appareils auxiliaires.

**7.** Procédé de calcul selon la revendication précédente, dans lequel, si, au cours du trajet, la consommation en courant électrique des appareils auxiliaires varie sensiblement, les étapes d) et suivantes sont réitérées.

**8.** Procédé de calcul selon l'une des revendications précédentes, dans lequel, une mémoire mémorisant les relations (CE$_j$) prédéterminées ainsi qu'un tableau (TAB) associant à chaque valeur d'attribut (FC, SC, SL, TS, RG, LL NL, SMS) une probabilité que le tronçon (T$_i$) soit associée à l'une ou l'autre des relations (CE$_j$) prédéterminées, à l'étape d), il est prévu pour chaque tronçon (T$_i$) :

- de déterminer grâce audit tableau (TAB), compte tenu des valeurs des attributs (FC, SC, SL, TS, RG, LL NL, SMS) associés à ce tronçon (T$_i$), la somme des probabilités que le tronçon (T$_i$) appartienne à l'une ou l'autre des relations (CE$_j$) prédéterminées, et
- de sélectionner la relation (CE$_j$) présentant la somme de probabilité la plus élevée.

**9.** Procédé de calcul selon l'une des revendications précédentes, dans lequel, les relations étant des courbes, chaque courbe (CE$_j$) est définie comme un polynôme de second ordre, pour lequel les variations de charge et décharge ($\Delta$SOE) de la batterie de traction sont bornées entre un seuil minimal ($\Delta$SOE$_{min}$) et un seuil maximal ($\Delta$SOE$_{max}$).

**10.** Procédé de calcul selon la revendication précédente, dans lequel ledit polynôme présente deux coefficients ($\Psi_1$, $\Psi_2$) invariables.

**11.** Procédé de calcul selon l'une des revendications précédentes, dans lequel, à l'étape b), chaque tronçon (T$_i$) est défini comme étant une portion de longueur maximale du trajet qui comporte au moins un attribut (RG, SC, FC) invariable sur toute sa longueur.

**12.** Procédé de calcul selon la revendication précédente, dans lequel ledit attribut invariable sur chaque tronçon (T$_i$) est choisi dans la liste suivante :

- pente (RG) du tronçon (T$_i$),
- vitesse caractéristique (SC) des véhicules sur le tronçon (T$_i$),
- catégorie (FC) affectée au tronçon (T$_i$) par le système de navigation.

**13.** Procédé de calcul selon l'une des revendications précédentes, dans lequel, à l'étape e), la détermination du point optimal de consommation (P$_i$) de la relation (CE$_i$) associée à chaque tronçon (T$_i$) est effectuée au moyen d'un algorithme d'optimisation (A*).

**Patentansprüche**

**1.** Verfahren zur Berechnung eines Sollwerts zur Verwaltung des Kraftstoff- und Stromverbrauchs eines Hybridfahrzeugs, umfassend mindestens einen Elektromotor, der durch eine Traktionsbatterie mit elektrischem Strom versorgt wird, und einen Verbrennungsmotor, der mit Kraftstoff versorgt wird, **dadurch gekennzeichnet, dass** es die Schritte aufweist:

a) des Erfassens einer zurückzulegenden Fahrstrecke über ein Navigationssystem,
b) des Aufteilens der Fahrstrecke in aufeinanderfolgende Teilabschnitte (T$_i$, i∈{1...N}),
c) des Erfassens von Attributen (FC, SC, SL, TS, RG, LL NL, SMS) für jeden Teilabschnitt (T$_i$), die den Teilabschnitt (T$_i$) kennzeichnen,
d) des Auswählens für jeden der Teilabschnitte (T$_i$) und unter Berücksichtigung seiner Attribute (FC, SC, SL, TS, RG, LL NL, SMS) aus mehreren vorbestimmten Beziehungen (CE$_j$, j∈{1...M}), die Werte des Kraftstoffverbrauchs (CC) mit Werten des Stromverbrauchs ($\Delta$SOE) verbinden, einer Beziehung (CE$_j$), die den Kraftstoffverbrauch (CC) des Hybridfahrzeugs auf dem Teilabschnitt (T$_i$) mit seinem Stromverbrauch ($\Delta$SOE) verbindet,
e) des Bestimmens eines optimalen Ver-

brauchspunkts ($P_i$) in jeder der ausgewählten Beziehungen ($CE_j$), derart, dass die gesamten optimalen Punkte ($P_i$, $i \in \{1...N\}$) den Kraftstoffverbrauch des Hybridfahrzeugs auf der gesamten Fahrstrecke minimieren und die Entladung der Traktionsbatterie am Ende der Fahrstrecke maximieren, und

f) des Ausarbeitens eines Sollwerts zur Verwaltung des Stromverbrauchs entlang der gesamten Fahrstrecke in Abhängigkeit von den Koordinaten der optimalen Punkte ($P_i$).

2. Verfahren zur Berechnung nach dem vorhergehenden Anspruch, wobei die vorbestimmten Beziehungen ($CE_j$) Kurven oder Kartographien sind, die Werte des Kraftstoffverbrauchs ($CC$) des Verbrennungsmotors mit Werten der Ladung oder der Entladung ($\Delta SOE$) der Traktionsbatterie verbinden.

3. Verfahren zur Berechnung nach einem der vorhergehenden Ansprüche, wobei in dem Schritt d) die Beziehungen ($CE_j$) unabhängig von der Steigung ($RG$) des Teilabschnitts ($T_i$) ausgewählt wird, und wobei vor dem Schritt e) ein Schritt d1) des Korrigierens der Beziehung ($CE_j$) unter Berücksichtigung der Steigung ($RG$) vorgesehen wird.

4. Verfahren zur Berechnung nach dem vorhergehenden Anspruch, wobei der Schritt d1) des Korrigierens darin besteht, jeden Punkt der Beziehung ($CE_j$) derart zu verschieben, um bei konstantem Wert der Ladung oder Entladung ($\Delta SOE$) den Kraftstoffverbrauch ($CC$) um einen Wert zu modifizieren, der von der Steigung ($RG$) abhängig ist.

5. Verfahren zur Berechnung nach einem der vorhergehenden Ansprüche, wobei in dem Schritt d) die Beziehung ($CE_j$) unabhängig von dem Stromverbrauch von Hilfsgeräten, die von dem Elektromotor verschieden sind und die durch die Traktionsbatterie mit elektrischem Strom versorgt werden, ausgewählt wird, und wobei vor dem Schritt e) ein Schritt d2) des Korrigierens der Beziehung ($CE_j$) unter Berücksichtigung des Stromverbrauchs der Hilfsgeräte vorgesehen wird.

6. Verfahren zur Berechnung nach dem vorhergehenden Anspruch, wobei der Schritt d2) des Korrigierens darin besteht, jeden Punkt der Beziehung ($CE_j$) derart zu verschieben, um bei konstantem Wert des Kraftstoffverbrauchs ($CC$) die Ladung oder Entladung ($\Delta SOE$) um einen Wert zu modifizieren, der von dem Stromverbrauch der Hilfsgeräte abhängig ist.

7. Verfahren zur Berechnung nach dem vorhergehenden Anspruch, wobei, wenn während der Fahrstrecke der Stromverbrauch der Hilfsgeräte erheblich schwankt, der Schritt d) und die folgenden Schritte wiederholt werden.

8. Verfahren zur Berechnung nach einem der vorhergehenden Ansprüche, wobei, wobei ein Speicher die vorbestimmten Beziehungen ($CE_j$) und eine Tabelle ($TAB$) abspeichert, die jedem Attributwert ($FC$, $SC$, $SL$, $TS$, $RG$, $LL$ $NL$, $SMS$) eine Wahrscheinlichkeit zuordnet, dass der Teilabschnitt ($T_i$) mit einer oder der anderen der vorbestimmten Beziehungen ($CE_j$) verbunden wird, beim Schritt d) für jeden Teilabschnitt ($T_i$) vorgesehen wird:

    - dank der Tabelle ($TAB$) unter Berücksichtigung der Attribute ($FC$, $SC$, $SL$, $TS$, $RG$, $LL$ $NL$, $SMS$), die diesem Teilabschnitt ($T_i$) zugeordnet werden, die Summe der Wahrscheinlichkeiten zu bestimmen, dass der Teilabschnitt ($T_i$) zu der einen oder der anderen der vorbestimmten Beziehungen ($CE_j$) gehört, und
    - die Beziehung ($CE_j$) auszuwählen, die die Summe der höchsten Wahrscheinlichkeit aufweist.

9. Verfahren zur Berechnung nach einem der vorhergehenden Ansprüche, wobei, wobei die Beziehungen Kurven sind, jede Kurve ($CE_j$) als ein Polynom vierten Grades definiert wird, wobei die Variationen der Ladung oder Entladung ($\Delta SOE$) der Traktionsbatterie zwischen einem Mindestschwellenwert ($\Delta SOE_{min}$) und einem Maximalschwellenwert ($\Delta SOE_{max}$) begrenzt werden.

10. Verfahren zur Berechnung nach dem vorhergehenden Anspruch, wobei das Polynom zwei unveränderliche Koeffizienten ($\Psi_1$, $\Psi_2$) aufweist.

11. Verfahren zur Berechnung nach einem der vorhergehenden Ansprüche, wobei bei dem Schritt b) jeder Teilabschnitt ($T_i$) als ein Abschnitt von maximaler Länge der Fahrstrecke definiert wird, der mindestens ein unveränderliches Attribut ($RG$, $SC$, $FC$) über seine gesamte Länge aufweist.

12. Verfahren zur Berechnung nach dem vorhergehenden Anspruch, wobei das unveränderliche Attribut auf jedem Teilabschnitt ($T_i$) aus der folgenden Liste ausgewählt wird:

    - Steigung ($RG$) des Teilabschnitts ($T_i$),
    - charakteristische Geschwindigkeit ($SC$) der Fahrzeuge auf dem Teilabschnitt ($T_i$),
    - Kategorie ($FC$), die dem Teilabschnitt ($T_i$) durch das Navigationssystem zugeordnet wird.

13. Verfahren zur Berechnung nach einem der vorhergehenden Ansprüche, wobei bei dem Schritt e) das Bestimmen des optimalen Verbrauchspunkts ($P_i$)

der Beziehung ($CE_i$), die jedem Teilabschnitt ($T_i$) zugeordnet wird, mittels eines Optimierungsalgorithmus (A*) durchgeführt wird.

**Claims**

1. Calculation method for calculating a setpoint for managing the fuel and electricity consumption of a hybrid motor vehicle comprising at least one electric motor supplied with electricity by a traction battery, and an internal combustion engine supplied with fuel, **characterized in that** it includes the steps of:

   a) acquiring, by means of a navigation system, a journey to be made,
   b) dividing said journey into successive sections ($T_i$, $i \in \{1...N\}$),
   c) acquiring, for each section ($T_i$), attributes (FC, SC, SL, TS, RG, LL NL, SMS) characterizing said section ($T_i$),
   d) for each of said sections ($T_i$) and taking into account its attributes (FC, SC, SL, TS, RG, LL NL, SMS), selecting, from among a plurality of predetermined relationships ($CE_j$, $j \in \{1...M\}$) linking fuel consumption (CC) values to electrical energy consumption ($\Delta SOE$) values, a relationship ($CE_j$) linking the fuel consumption (CC) of the hybrid motor vehicle over the section ($T_i$) to its electrical energy consumption ($\Delta SOE$),
   e) determining an optimal point of consumption ($P_i$) in each of the selected relationships ($CE_j$), such that the set of optimal points ($P_i$, $i \in \{1...N\}$) minimize the fuel consumption of the hybrid motor vehicle over the entire journey and maximize the discharge of the traction battery at the end of said journey, and
   f) developing an energy management setpoint throughout the journey, according to the coordinates of said optimal points ($P_i$).

2. Calculation method according to the preceding claim, in which the predetermined relationships ($CE_j$) are curves or maps linking fuel consumption (CC) values of the internal combustion engine to charge or discharge ($\Delta SOE$) values of the traction battery.

3. Calculation method according to one of the preceding claims, in which, in step d), the relationship ($CE_j$) is selected regardless of the gradient (RG) of said section ($T_i$), and in which, prior to step e), provision is made for a correction step d1) for correcting said relationship ($CE_j$) taking into account said gradient (RG).

4. Calculation method according to the preceding claim, in which said correction step d1) consists in shifting each point of the relationship ($CE_j$) so as to modify, at a constant charge or discharge ($\Delta SOE$) value, the fuel consumption (CC) by a value according to the gradient (RG) .

5. Calculation method according to one of the preceding claims, in which, in step d), the relationship ($CE_j$) is selected regardless of the electricity consumption of auxiliary devices which are separate from the electric motor and which are powered by the traction battery, and in which, prior to step e), provision is made for a correction step d2) for correcting said relationship ($CE_j$) taking into account said electricity consumption of the auxiliary devices.

6. Calculation method according to the preceding claim, in which said correction step d2) consists in shifting each point of the relationship ($CE_j$) so as to modify, at a constant fuel consumption (CC) value, the charge or discharge ($\Delta SOE$) by a value according to said electricity consumption of the auxiliary devices.

7. Calculation method according to the preceding claim, in which, if, during the journey, the electricity consumption of the auxiliary devices varies substantially, steps d) and following are repeated.

8. Calculation method according to one of the preceding claims, in which, a memory storing the predetermined relationships ($CE_j$) and a table (TAB) associating with each attribute value (FC, SC, SL, TS, RG, LL NL, SMS) a probability that the section ($T_i$) is associated with one or other of the predetermined relationships ($CE_j$), in step d), provision is made for each section ($T_i$) :

   - to determine, thanks to said table (TAB), taking into account the values of the attributes (FC, SC, SL, TS, RG, LL NL, SMS) associated with this section ($T_i$), the sum of the probabilities that the section ($T_i$) belongs to one or other of the predetermined relationships ($CE_j$), and
   - to select the relationship ($CE_j$) having the highest probability sum.

9. Calculation method according to one of the preceding claims, in which, since the relationships are curves, each curve ($CE_j$) is defined as a second order polynomial, for which the variations in charge and discharge ($\Delta SOE$) of the traction battery are bounded between a minimum threshold ($\Delta SOE_{min}$) and a maximum threshold ($\Delta SOE_{max}$).

10. Calculation method according to the preceding claim, in which said polynomial has two invariable coefficients ($\Psi_1$, $\Psi_2$).

11. Calculation method according to one of the preceding claims, in which, in step b), each section ($T_i$) is defined as being a portion of maximum length of the journey that comprises at least one invariable attribute (RG, SC, FC) throughout its length.

12. Calculation method according to the preceding claim, in which said invariable attribute over each section ($T_i$) is chosen from the following list:

> - gradient (RG) of the section ($T_i$),
> - characteristic speed (SC) of vehicles over the section ($T_i$),
> - category (FC) assigned to the section ($T_i$) by the navigation system.

13. Calculation method according to one of the preceding claims, in which, in step e), the optimal consumption point ($P_i$) of the relationship ($CE_i$) associated with each section ($T_i$) is determined by means of an optimization algorithm (A*).

## Fig.1

| T1 | | T2 | | T3 | | | ... | TN | |
|----|----|----|----|----|----|----|----|----|----|
| Attribut | Valeur | Attribut | Valeur | Attribut | Valeur | | | Attribut | Valeur |
| FC | 2 | FC | 3 | FC | 6 | | | FC | 1 |
| SC | 5 | SC | 4 | SC | 1 | | | SC | 6 |
| SL | 70 km/h | SL | 60 km/h | SL | 130 km/h | | | SL | 30 km/h |
| TS | 43 km/h | TS | 74 km/h | TS | 97 km/h | | | TS | 35 km/h |
| RG | 3% | RG | -5% | RG | 0% | | | RG | 0% |
| LL | 12km | LL | 8km | LL | 29km | | | LL | 1km |

## Fig.2

| T1 | T2 | T3 | ... | TN |
|----|----|----|----|----|
| | | | | |
| $\psi_{2,1}$ | $\psi_{2,2}$ | $\psi_{2,3}$ | | $\psi_{2,N}$ |
| $\psi_{1,1}$ | $\psi_{1,2}$ | $\psi_{1,3}$ | | $\psi_{1,N}$ |
| $\psi_{0,1}$ | $\psi_{0,2}$ | $\psi_{0,3}$ | | $\psi_{0,N}$ |
| $\Delta SoEmin_1$ | $\Delta SoEmin_2$ | $\Delta SoEmin_3$ | | $\Delta SoEmin_N$ |
| $\Delta SoEmax_1$ | $\Delta SoEmax_2$ | $\Delta SoEmax_3$ | | $\Delta SoEmax_N$ |
| $RG_1$ | $RG_2$ | $RG_3$ | | $RG_N$ |
| $LL_1$ | $LL_2$ | $LL_3$ | | $LL_N$ |

Fig.3

Fig.4

Fig.5

| CE_i / Attributs | | CE_1 | CE_2 | CE_3 | CE_4 | ... | CE_11 |
|---|---|---|---|---|---|---|---|
| **nom** | **valeur** | | | | | | |
| FC | 1 | | | | | | |
| | 2 | $a_1$ | $a_2$ | $a_3$ | $a_4$ | ... | $a_{11}$ |
| | ... | | | | | | |
| | 6 | | | | | | |
| SC | 1 | | | | | | |
| | 2 | | | | | | |
| | ... | | | | | | |
| | 6 | $b_1$ | $b_2$ | $b_3$ | $b_4$ | ... | $b_{11}$ |
| SL | 30 | $c_1$ | $c_2$ | $c_3$ | $c_4$ | ... | $c_{11}$ |
| | ... | | | | | | |
| | 130 | | | | | | |
| NL | 1 | | | | | | |
| | 2 | $d_1$ | $d_2$ | $d_3$ | $d_4$ | ... | $d_{11}$ |
| | ≥3 | | | | | | |
| SMS | <20 | | | | | | |
| | 20-40 | | | | | | |
| | 40-60 | | | | | | |
| | 60-80 | $e_1$ | $e_2$ | $e_3$ | $e_4$ | ... | $e_{11}$ |
| | 80-100 | | | | | | |
| | >100 | | | | | | |
| TS | <20 | | | | | | |
| | 20-40 | | | | | | |
| | 40-60 | $f_1$ | $f_2$ | $f_3$ | $f_4$ | ... | $f_{11}$ |
| | 60-80 | | | | | | |
| | 80-100 | | | | | | |
| | >100 | | | | | | |

TAB

**Fig.6**

**Fig.7**

**Fig.8**

## RÉFÉRENCES CITÉES DANS LA DESCRIPTION

**Documents brevets cités dans la description**

- US 8825243 B
- FR 2988674
- WO 2013150206 A
- WO 2014001707 A